# EUROPEAN PATENT APPLICATION

(11) **EP 4 485 350 A1**
(43) Date of publication of application: **01.01.2025**
(21) Application number: 22927186.1
(22) Date of filing: 21.02.2022
(51) Int. Cl.: G06T 7/11

(54) **IMAGE ANALYSIS SYSTEM AND IMAGE ANALYSIS METHOD**

(71) Applicant: NEC Corporation, 108-8001 Tokyo (JP)
(72) Inventor: TANAKA Taichi, Tokyo 108-8001 (JP)
(74) Representative: Betten & Resch
(86) International application number: PCT/JP2022/006889
(87) International publication number: WO 2023/157286

(57) **Abstract**

An image analysis system and an image analysis method are provided that can rapidly extract a cluster of pixels having variations according to the same probability distribution. The image analysis system 10 includes a similarity calculation unit 11 which calculates similarity between a representative distribution representing a cluster and a distribution of pixel values in the cluster, a representative calculation unit 12 which calculates a distribution for a plurality of pixels in each cluster as the representative distribution, and a dividing unit 13 which assigns pixels in an input image to one of a plurality of the clusters with reference to the similarity.

## Description

### Technical Field

This invention relates to an image analysis system and an image analysis method applicable to image analysis based on radar images and the like.

### Background Art

Synthetic aperture radar (SAR) technology is a technology which can obtain an image (hereinafter referred to as a SAR image) equivalent to the image by an antenna having a large aperture, when a radar mounted on a flying object such as an artificial satellite, an aircraft, or the like transmits and receives a radio wave while the flying object moves. The synthetic aperture radar is utilized, for example, for analyzing a ground surface deformation by signal processing of reflected waves from the ground surface, etc. The ground surface shall include not only the ground but also the surface (top surface) where a low structure such as a building exists.

An image taken by a flying object such as a satellite is called a radar image. A SAR image is an example of a radar image. Hereinafter, a flying object that transmits and receives electromagnetic waves is assumed to be a satellite, but a flying object is not limited to a satellite.

One example of image analysis is interferometric analysis which investigates displacement, elevation, etc. based on phase differences between multiple SAR images. Another example of image analysis is change detection, which detects changes or anomalies on the ground based on changes in intensity. It should be noted that these are only examples of image analysis, and the field of image analysis is wide-ranging.

SAR images contain natural objects and artifacts with various characteristics.
Therefore, pixel values of respective pixels in a SAR image may have different characteristics depending on the object that the pixel is capturing. In particular, it is known that the stochastic variation of pixel values, i.e., noise, has different characteristic depending on the type of subject. Therefore, if the characteristic dependent on the type of subject is not taken into account, the result from image analysis will be inaccurate.

To solve such a problem, it is useful to extract statistically homogeneous pixels. For example, patent literature 1 describes a technique for extracting statistically homogeneous pixels. A pixel discrimination device to which the technique is applied sets a window of a predetermined size in the SAR image. The pixel discrimination device regards one pixel in the window as an interest pixel. The pixel discrimination device determines whether a pixel neighboring the interest pixel are statistically homogeneous with respect to the interest pixel. The pixel discrimination device performs a determination process while sequentially setting each of all pixels in the window as an interest pixel.

In the determination process, the pixel discrimination device calculates a vector containing N amplitude or intensity values for an interest pixel determined in N (N: two or more natural numbers) SAR images. The pixel discrimination device defines a window for the interest pixel. For all pixels included in the window, the pixel discrimination device compares the vector of each neighboring pixel (N elements) with the vector of the interest pixel using a statistical test. The pixel discrimination device uses the Kolmogorov-Smirnov test (KS test) as a statistical test.

That is, the pixel discrimination device compares the cumulative density function generated from N observations (corresponding to N SAR images) at the interest pixel with the cumulative density function generated for each neighboring pixel using the KS test. The cumulative density function is almost synonymous with the cumulative distribution function (CDF), but strictly speaking, it corresponds to the estimated result of the CDF based on observed values. The cumulative density function can also be expressed as a function obtained by interpolating a cumulative relative frequency.

The pixel discrimination device extracts neighboring pixels that are directly or indirectly contiguous with the interest pixel among neighboring pixels that are determined to be similar to the interest pixel. The pixel discrimination device finally determines that the extracted neighboring pixels are statistically homogeneous to the interest pixel. Specifically, when the maximum absolute value of the difference between the cumulative density function for the interest pixel and the cumulative density function for the neighboring pixel is smaller than a predetermined threshold value, the pixel discrimination device considers that the interest pixel and the neighboring pixel follow the same probability distribution, that is, they are generated with the same probability density function, and determines that the neighboring pixel is statistically homogeneous to the interest pixel.

### Citation List

### Patent Literature

PTL 1: International Publication No. 2010/112426

### Summary of Invention

### Technical Problem

According to the technique described in patent literature 1, statistically homogeneous pixels can be extracted from a SAR image.

However, the pixel discrimination device described in patent literature 1 requires an enormous amount of computation time because it compares each of a large number of interest pixels with all the pixels in the window. In other words, it takes time to obtain statistically homogeneous pixels.

It is an object of the present invention to provide an image analysis system and an image analysis method that can rapidly extract multiple groups of pixels from an image.

### Solution to Problem

The image analysis system according to the present invention includes similarity calculation means for calculating similarity between a representative distribution representing a cluster and a distribution of pixel values in the cluster, representative calculation means for calculating a distribution for a plurality of pixels in each cluster as the representative distribution, and dividing means for assigning pixels in an input image to one of a plurality of the clusters with reference to the similarity.

The image analysis method according to the present invention includes calculating similarity between a representative distribution representing a cluster and a distribution of pixel values in the cluster, calculating a distribution for a plurality of pixels in each cluster as the representative distribution, and assigning pixels in an input image to one of a plurality of the clusters with reference to the similarity.

The image analysis program according to the invention causes a computer to execute calculating similarity between a representative distribution representing a cluster and a distribution of pixel values in the cluster, calculating a distribution for a plurality of pixels in each cluster as the representative distribution, and assigning pixels in an input image to one of a plurality of the clusters with reference to the similarity.

### Advantageous Effects of Invention

According to this invention, multiple groups of pixels can be rapidly extracted from an image.

### Brief Description of Drawings

[Fig. 1] It depicts a block diagram showing an image analysis device of the first example embodiment.
[Fig. 2] It depicts a flowchart showing an operation of the image analysis device of the first example embodiment.
[Fig. 3]It depicts an explanatory diagram for explaining a specific example of processes of the dividing unit, the similarity calculation unit, and the representative calculation unit.
[Fig. 4] It depicts an explanatory diagram for explaining a specific example of a process of the representative calculation unit.
[Fig. 5] It depicts a flowchart showing an example of an operation of the representative calculation unit.
[Fig. 6] It depicts a block diagram showing an image analysis device of the second example embodiment.
[Fig. 7] It depicts a flowchart showing an operation of the image analysis device of the second example embodiment.
[Fig. 8] It depicts an explanatory diagram showing an example of a search range.
[Fig. 9] It depicts an explanatory diagram showing another example of a search range.
[Fig. 10] It depicts a block diagram showing an image analysis device of the third example embodiment.
[Fig. 11] It depicts a flowchart showing an operation of the image analysis device of the third example embodiment.
[Fig. 12] It depicts a block diagram showing an image analysis device of the fourth example embodiment.
[Fig. 13] It depicts a flowchart showing an operation of the image analysis device of the fourth example embodiment.
[Fig. 14] It depicts a block diagram showing an image analysis device of the fifth example embodiment.
[Fig. 15] It depicts a block diagram showing an image analysis system of the first example.
[Fig. 16] It depicts a block diagram showing an image analysis system of the modified first example.
[Fig. 17] It depicts a block diagram showing an image analysis system of the second example.
[Fig. 18] It depicts a block diagram showing an image analysis system of the third example.
[Fig. 19] It depicts a flowchart showing an operation of the image analysis system of the third example.
[Fig. 20] It depicts a block diagram showing an example of a computer having a CPU.
[Fig. 21] It depicts a block diagram showing the main part of the image analysis system.

### Description of Embodiments

Hereinafter, example embodiments of the present invention will be explained with reference to the drawings. In each of the example embodiments described below, a SAR image is taken as an example of a radar image obtained using electromagnetic waves. However, a radar image is not limited to a SAR image. For example, a radar image may be an optical image.

### Example embodiment 1.

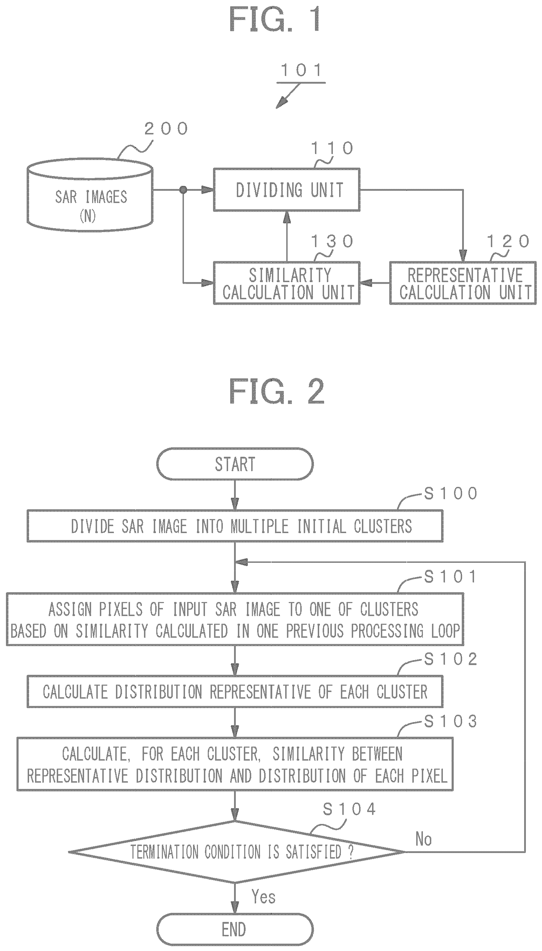

Fig. 1 is a block diagram showing the image analysis device of the first example embodiment. The image analysis device 101 of the first example embodiment comprises a dividing unit 110, a representative calculation unit 120, and a similarity calculation unit 130. The image analysis device 101 can input SAR images from the SAR image storage unit 200.

The image analysis device 101 of the first example embodiment is an image analysis device (similar pixel extraction device) that extracts similar pixels in SAR images in an image analysis system. In other example embodiments described below, the image analysis device also constitutes a similar pixel extraction device that extracts similar pixels in SAR images.

The SAR image storage unit 200 stores N SAR images (for example, N = about 10 to 30) in which the same region is captured. In other words, the SAR image storage unit 200 stores N SAR images in which the analysis area is commonly captured. The SAR images stored in the SAR image storage unit 200 (a group of SAR images) are hereinafter referred to as input SAR images or input SAR image group. The SAR images are aligned so that pixels at the same location in each SAR image are pixels of the same point or geographic feature.

The arrows in Fig. 1 indicate the direction of signal (data) flow in a straightforward manner, but do not preclude bidirectionality. This is also true for the other block diagrams.

Each of the N SAR images is a radar image in which the same region is recorded and was acquired at different times or orbits. SAR images stored in the SAR image storage unit 200 may be images acquired at different times but at the same orbit. The plurality of SAR images may also be images acquired at the same time, although they were acquired at different orbits. Further, the multiple SAR images may be images that are acquired at different times and at different orbits.

An imaging condition (acquisition time, incidence angle, bandwidth, etc.) are not limited to the condition at the time the image was actually taken, but may be artificially synthesized. For example, in the imaging method known as polarimetric SAR, characteristic dependent on the electric field direction of the electromagnetic wave can be obtained by controlling conditions such as the electric field direction of the irradiating electromagnetic wave and the sensitivity and phase delay in the electric field direction of the antenna when receiving the electromagnetic wave (polarimetric imaging condition). With this imaging method, images taken under arbitrary polarization condition can be reproduced by combining images taken under two or three different polarization conditions.

Even with ordinary SAR, which is not polarized SAR, it is possible to extract images of only a part of the bandwidth by performing a filter process to extract a part of the bandwidth by transforming the SAR image to the frequency domain, such as Fourier transform, after the image is taken. The filtering process to extract a part of the bandwidth may be a process of randomly extracting a part, or a filtering process of randomly excluding a part.

By using the above method, a group of SAR images taken in several different bandwidths can be constructed. In other words, a group of SAR images can be constructed by generating images of imaging conditions that are not physically used.

The following is an example of a case where the dividing unit 110, the similarity calculation unit 130, and the representative calculation unit 120 use as pixel values the absolute values for the complex values that each of the SAR pixels has, or values obtained by converting the absolute values by the method described below.

The dividing unit 110 assigns pixels in the SAR image to one of a plurality of clusters with reference to the similarity calculated by the similarity calculation unit 130. Some pixels may be assigned across multiple clusters.

The representative calculation unit 120 calculates a distribution for multiple pixels in a cluster as a representative distribution (representative distribution representing a cluster). As an example, the representative calculation unit 120 calculates a distribution that is similar to any pixel in each cluster as the representative distribution for the cluster.

The similarity calculation unit 130 calculates the similarity between the distribution as representative for each cluster (representative distribution) calculated by the representative calculation unit 120 and the distribution of each pixel value in the SAR image. The distribution is, for example, a probability density function or an estimate thereof. However, if it can be determined that a pixel is statistically homogeneous to other pixels, other forms may be used, such as a probability distribution parameter or cumulative density function. For example, the similarity calculation unit 130 determines that the two are similar when the difference (or the maximum absolute value of the difference) between both distributions (cumulative density distribution, etc.) is less than a predetermined predetermined value.

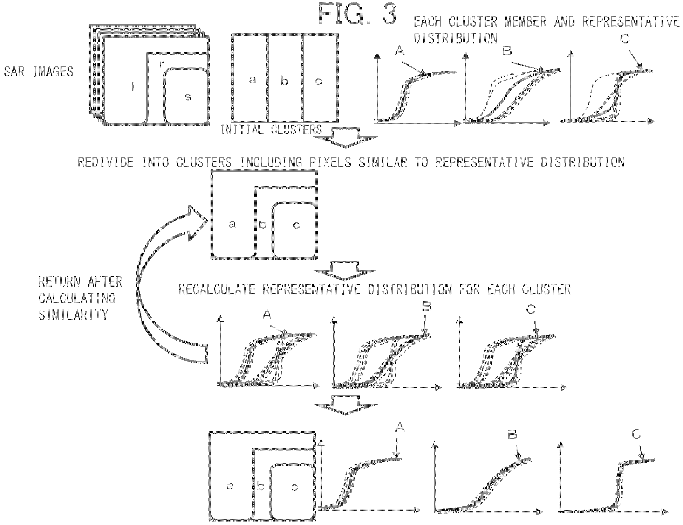

Next, the operation of the image analysis device 101 will be explained with reference to the flowchart of Fig. 2 and the explanatory diagram of Fig. 3.

The dividing unit 110 divides the SAR image into multiple initial clusters (step S100). The method of division is arbitrary. As an example, the dividing unit 110 generates multiple initial clusters so that the area of each cluster is the same.

In step S101, the dividing unit 110 assigns each pixel of the input SAR image to one of the clusters based on the similarity calculated in the one previous processing loop (processing of steps S102 and S103). In other words, the dividing unit 110 generates multiple clusters.

The representative calculation unit 120 calculates a distribution representative of each cluster, i.e., a representative distribution for each cluster (step S102). The similarity calculation unit 130 calculates, for each cluster, the similarity between the representative distribution and the distribution of each pixel value in the cluster (step S103).

When the termination condition is not satisfied, the process returns to step S101 (step S104). When the termination condition is satisfied, the image analysis device 101 terminates the process (step S104). The termination condition is satisfied, for example, when the processing of steps S101 to S103 is executed a predetermined number of times. The termination condition may be assumed to be satisfied when the shape of each cluster generated in step S101 is no longer significantly different from the shape of each cluster generated in the previous (in the one previous processing loop) processing. The termination condition may also be assumed to be satisfied when the calculated similarity of each pixel is no longer significantly different from the similarity of the corresponding pixel calculated in the previous processing loop. Each cluster that has been determined when the termination condition is satisfied corresponds to a cluster that satisfies the criteria for determining that it is homogeneous.

Referring to the explanatory diagram of Fig. 3, a specific example of the processing of the dividing unit 110, the representative calculation unit 120, and the similarity calculation unit 130 will be explained. Fig. 3 shows an example where the SAR image includes areas of soil, an area l of lawn, and an area r of road.

The top row in Fig. 3 illustrates that three rectangular clusters a, b, and c have been generated as initial clusters, and their respective representative distributions A, B, and C are illustrated by bold lines. The other lines (dashed lines) show examples of the distributions of the cluster members (i.e., pixels).

The dividing unit 110 constructs a new cluster by collecting pixels with a distribution similar to the representative distribution of the cluster (pixels whose difference in distribution is less than a predetermined value), as illustrated in the second row from the top in Fig. 3.

The representative calculation unit 120 recalculates the representative distribution for each of the new clusters, as illustrated in the third row from the top in Fig. 3. The similarity calculation unit 130 calculates the similarity (new similarity) between the representative distribution and the distribution of pixel values in the cluster by using the recalculated representative distribution. The dividing unit 110 then performs a process of generating clusters again based on the new similarity.

The bottom row in Fig. 3 shows examples of clusters a, b, and c and representative distributions A, B, and C and member distributions when the termination condition is satisfied. As shown in the bottom row of Fig. 3, when the termination condition is satisfied, the representative distribution and the member distribution are approximate.

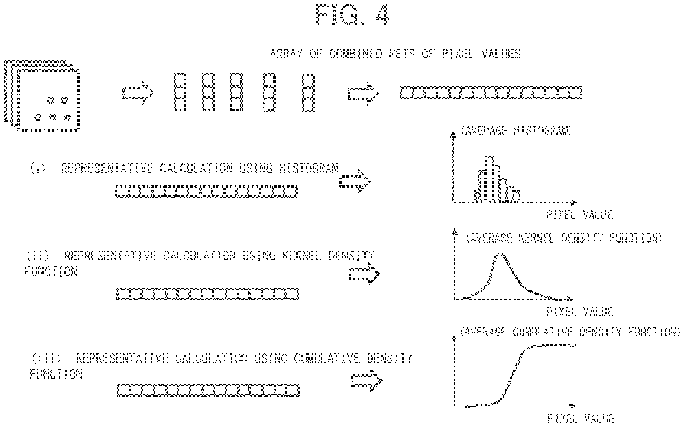

Next, a specific example of the process of the representative calculation unit 120 will be explained with reference to the explanatory diagram in Fig. 4.

In the example shown in Fig. 4, the representative calculation unit 120 calculates a representative distribution as an average form of the distribution of pixel values each member has for all members. This is accomplished by generating an array by combining the set of pixel values held by each member for all members, as illustrated in Fig. 4, and then estimating (calculating) a distribution for the pixel values contained in the array. In Fig. 4, the five pixels indicated by the circles are exemplarily shown to have been combined.

The representative calculation unit 120 can obtain an average of a histogram of each pixel by using, for example, a histogram for the array or a normalized histogram of it as a method of distribution estimation for the combined array (see (i) in Fig. 4). Alternatively, the representative calculation unit 120 may estimate (calculate) a representative distribution for the combined array using the kernel density function (see (ii) in Fig. 4). Further, the representative calculation unit 120 can estimate (calculate) a representative distribution as an average of the cumulative density functions (average cumulative density function), which is the estimator of the cumulative density distribution, by obtaining the cumulative frequencies for the combined sequences and normalizing them (see (iii) in Fig. 4).

The representative calculation unit 120 may also estimate the median or other value of the histogram, kernel density function, or cumulative density function as the representative distribution, rather than using the average over all members.

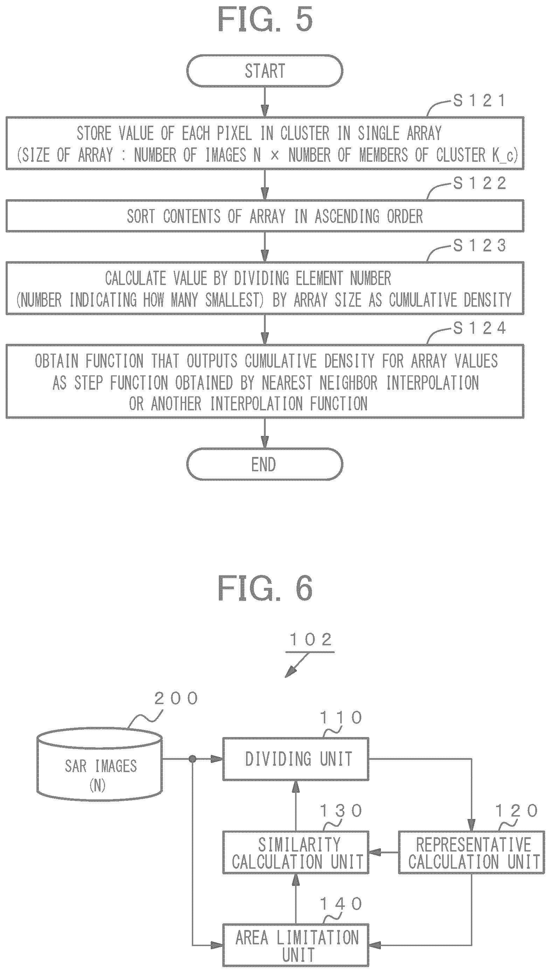

Fig. 5 is a flowchart showing the process of obtaining the average cumulative density function when the representative calculation unit 120 uses the average cumulative density function. In the following description, the number of SAR images is assumed to be N. The number of clusters is assumed to be C. The number of members (number of pixels) of a cluster is assumed to be K_c.

The representative calculation unit 120 stores the value (pixel value) of each pixel in a cluster in a single array (step S121). In this example, the size of the array for cluster c (c = 1 to C) is N × K_c. The representative calculation unit 120 sorts the contents of the array in ascending order (step S122). Then, the representative calculation unit 120 calculates a value by dividing the element number (the number indicating how many smallest) by the array size as the cumulative density (step S123).

The representative calculation unit 120 obtains a function that outputs the cumulative density for the array values as a step function obtained by nearest neighbor interpolation (step S124). Instead of the step function, the representative calculation unit 120 may derive another interpolation function as a function that outputs the cumulative density.

Since nearest neighbor interpolation adopts the value of the pixel at the nearest position as the value of a certain pixel, the result is a step function that takes a certain value within a certain range by nearest neighbor interpolation.

Incidentally, the cumulative density function obtained in processing of steps S121 to S124 is roughly the same as the average of the cumulative density functions estimated from the N pixel values extracted as common pixels in the N images of each pixel for each of the K_c pixels. Therefore, the term "average cumulative density function" is used here.

According to the process illustrated in Fig. 5, a cumulative density function can be rapidly obtained owing to use of nearest neighbor interpolation, etc. In addition, especially when the function outputting the cumulative density is obtained as a step function, the integral calculation can be replaced by a sum of the number of steps in the similarity calculation. Accordingly, the similarity calculation is also accelerated.

To simplify the cumulative density calculation, after the pixel values are stored in the array in the process of step S121, the representative calculation unit 120 may randomly select a few pixel values as the target of the process of step S 122. To simplify the cumulative density calculation, after the contents of the array are sorted in ascending order in the process of step S122, the representative calculation unit 120 may select pixel values from the array at predetermined intervals as the target of the process of step S123. The addition of such a process eliminates increase or decrease in the amount of calculation that depends on the size of the cluster. As a result, when the image analysis device is realized on a computer, excessive computer load and waste of computer capacity are prevented. It is also possible to reduce the required capacity of the memory that temporarily stores the result of the processing.

Next, an example of processing by the similarity calculation unit 130 will be explained. The similarity calculation unit 130 compares the distribution of each pixel value in a group of SAR images with the representative distribution of each cluster using a distribution similarity index.

One method of comparison using distributional similarity is to compare distributions themselves, for example, histograms or distances between kernel density functions. The method of comparison may be to compare distances obtained by defining the inner product between cumulative density functions, such as Maximum Mean discrepancy. For compared objects, Nonparametric tests that calculate the distance between cumulative density distributions, such as the Kolmogorov-Smirnov test, Cramer von mises test, Anderson Darling test, and Wasserstein distance, may be used. Further, for compared objects, methods that calculate the distance between distribution parameters (for example, mean, variance, etc.), the distance between moments, and the distance between distributional features similar to moments, may be used.

When the function outputting the cumulative density as described above is obtained as a step function, the similarity calculation is performed faster by using the method of calculating the cumulative density function as a step function with unequal intervals.

When the Kolmogorov-Smirnov test statistic is used, the maximum absolute value of the difference between the compared objects is used to determine whether the compared objects are similar or not. When the Wasserstein distance is used, the integral of the absolute value of the difference between the compared objects is used to determine whether the compared objects are similar or not. When the Kramer-Von Mises test is used, the integral of the squares of the absolute values of the differences between the compared objects is used to determine whether the compared objects are similar or not. When the Anderson-Darling test is used, the value of the weighted integral of the absolute difference of the compared objects is used to determine whether the compared objects are similar or not.

The similarity calculation unit 130 may use other similarity measures in combination with the distribution similarity measure. For example, the similarity calculation unit 130 can achieve the combined use by adding or multiplying the distance or the like between each pixel in the cluster and the pixel to be compared (in this example, the representative pixel corresponding to the representative distribution).

The representative calculation unit 120 and the similarity calculation unit 130 use the absolute pixel values of the SAR image, but they may use data that is a modification of that data. The modifications include, for example, γ correction and monotonic correction by logarithm. The modification reduces the dynamic range regarding the absolute value of the pixel values in the SAR image, making it easier to compare as a distribution and less likely to cause a decrease in calculation accuracy as a floating point. In addition, after reducing the dynamic range, the absolute values of pixel values may be quantized to an integer type, and operations related to distribution comparison may be made into integer operations to speed up processing. This is the same in other example embodiments.

### Example embodiment 2.

Fig. 6 is a block diagram of the image analysis device of the second example embodiment. The image analysis device 102 of the second example embodiment comprises a dividing unit 110, a representative calculation unit 120, a similarity calculation unit 130, and an area limitation unit 140. The image analysis device 102 can input SAR images from the SAR image storage unit 200. The function of each component in the image analysis device 102 other than the area limitation unit 140 is the same as the function of each component in the image analysis device 101 of the first example embodiment shown in Fig. 1. However, in this example embodiment, the representative calculation unit 120 also performs the process of determining a position of the representative pixel (representative pixel position) in a cluster.

The area limitation unit 140 limits the range (area) of pixels whose distribution is compared with the representative distribution to a predetermined range.

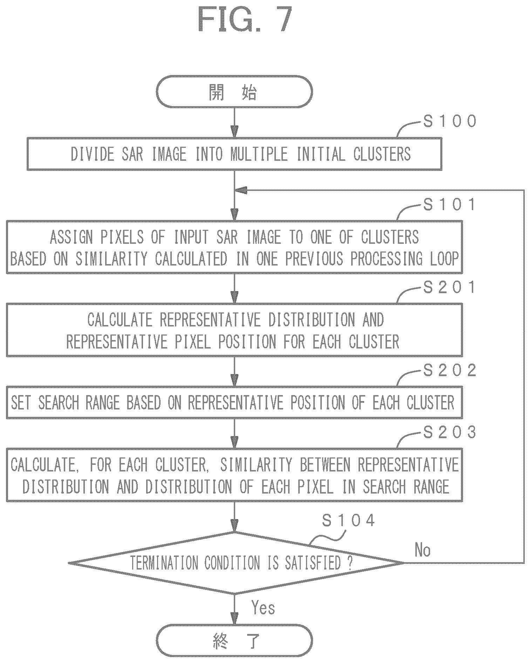

Next, the operation of the image analysis device 102 will be explained with reference to the flowchart of Fig. 7.

As in the first example embodiment, the dividing unit 110 divides the SAR image into multiple initial clusters (step S100). As in the first example embodiment, in step S101, the dividing unit 110 assigns each pixel of the input SAR image to one of the clusters based on the similarity calculated in the one previous processing loop (in this example embodiment, processing of steps S201 to S203). In other words, the dividing unit 110 generates multiple clusters.

The representative calculation unit 120 calculates the representative distribution of each cluster and the representative pixel position of each cluster (step S201).

The representative pixel position is a position that indicates where the pixels are distributed inside the cluster. For example, the representative pixel position is an average position of pixels in a cluster, for example, the center of gravity. The representative pixel position may be a position of a single point representative of the cluster, such as the center of a minimum radius circle or a minimum square surrounding the cluster pixels. The representative pixel position may also be each position of multiple pixels in the cluster.

The area limitation unit 140 limits the search range, which is a processing range of the similarity calculation unit 130, based on the representative pixel position output by the representative calculation unit 120 (step S202).

The area limitation unit 140 defines the search range as an area within a certain distance from the representative pixel position of the cluster, for example. For example, Euclidean distance, Chebyshev distance, or Manhattan distance can be used as the distance, but other types of distances may also be used.

When expressing pixel position, the row and column numbers of the pixel may be used as the coordinates of the pixel position. The pixel size may also be converted in advance so that the distance on the ground can be approximated by scaling it up or down based on how large the pixel is on a geographic scale. The coordinates may also be corrected for distortions based on the satellite position at the time the SAR image was taken and the unevenness on the ground, thereby allowing the exact distance on the ground to be calculated.

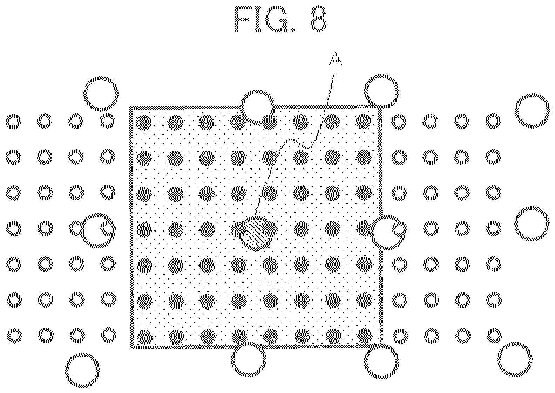

Fig. 8 shows an example of a search range. Fig. 8 shows an example in which the search range is a predetermined area within a Chebyshev distance from the representative pixel position A. In Fig. 8, small circles indicate pixels. The large shaded circle indicates the representative pixel position A. Other large circles indicate representative pixel positions. The area indicated by the shaded dot is the search area.

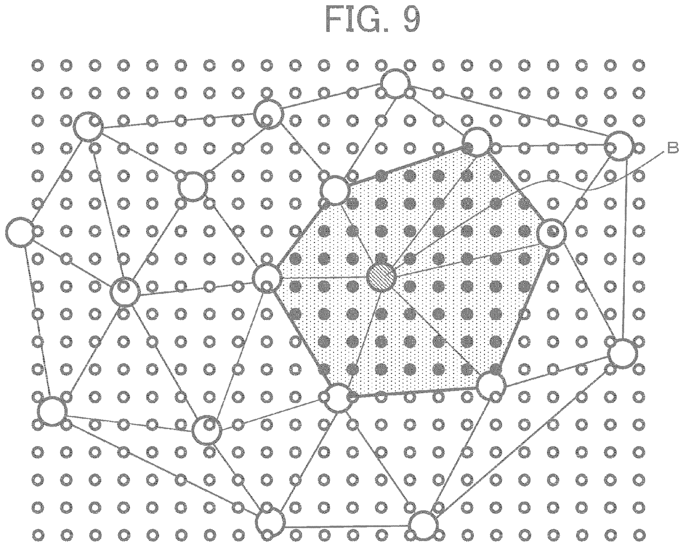

When determining just one representative pixel position for each cluster, a graph connecting the representative pixel positions may be used to limit the area. Fig. 9 is an explanatory diagram showing another example of a search range. In the example shown in Fig. 9, a graph connecting representative pixel positions of nearby clusters is generated. The area limitation for a cluster is then limited to the interior of the polygon formed by the representative pixel positions connected by no more than a certain number of edges.

Fig. 9 shows an example of area division using a Delaunay diagram. In Fig. 9, small circles indicate pixels. The large circle indicates the representative pixel position. When the large shaded circle is representative pixel position B, the polygonal area formed by other representative pixel positions connected to representative pixel position B by a single edge is determined as the search area.

The limitation of the search area has an effect of reducing the computational complexity of the similarity calculation unit 130 when the image analysis device is implemented on a computer. For example, when the area is limited to the interior of a polygon formed by graph generation using a Delaunay diagram and connection by one edge at the representative pixel position, each pixel is included in the search area of approximately three clusters. In this case, the number of calculations of distribution similarity is about 3K_c for the number of pixels K_c.

When the clusters are equally spaced, the number of calculations in this example embodiment is often less than that in the first example embodiment, compared to the number of distribution similarity calculations N × K_c when the number of clusters C is compared with all pixels K_c in the first example embodiment.

The same is true when the search area is limited within a certain distance from the representative pixel position. When the distance between representative pixel positions of clusters is L and the search area is 2L, the number of distribution similarity calculations is almost less than 4K_c, which greatly reduces the amount of calculation.

### Example embodiment 3.

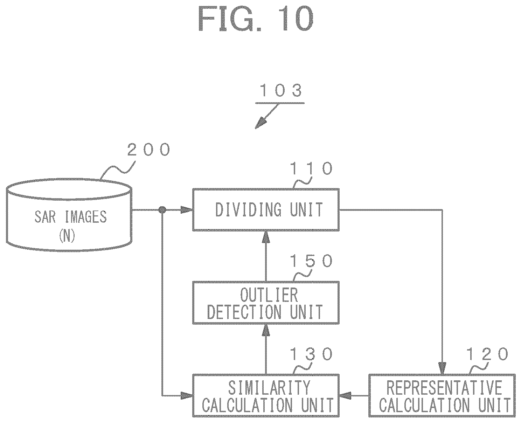

Fig. 10 is a block diagram showing the image analysis device of the third example embodiment. The image analysis device 103 of the third example embodiment comprises a dividing unit 110, a representative calculation unit 120, a similarity calculation unit 130, and an outlier detection unit 150. The image analysis device 103 can input SAR images from the SAR image storage unit 200. The function of each component in the image analysis device 103 other than the outlier detection unit 150 is the same as the function of each component in the image analysis device 101 of the first example embodiment shown in Fig. 1.

As described above, the dividing unit 110 constructs a new cluster by collecting pixels with a distribution similar to the representative distribution of the cluster. The similarity calculation unit 130 calculates the similarity between the representative distribution and the distribution of pixel values in the SAR image for each cluster. The outlier detection part 150 detects, for each cluster, when the similarity calculated by the similarity calculation part 130 is large (different) for any of the clusters compared to the representative distribution, then the pixel value distribution is an outlier. The outlier detection unit 150, for example, determines that the similarity is different from the representative distribution when the difference between the similarity calculated by the similarity calculation unit 130 and the representative distribution is greater than a predetermined value, and the distribution of pixel values is an outlier. The dividing unit 110 excludes outliers from the determination of whether or not they have a distribution similar to the representative distribution of the cluster.

As a result, the representative calculation unit 120 is not affected by outliers, making the process of generating clusters by the dividing unit 110 more accurate. Although a few isolated pixels in a SAR image may have different reflection characteristic than all other pixels as well, the outlier detection unit 150 can exclude the effect of such a situation.

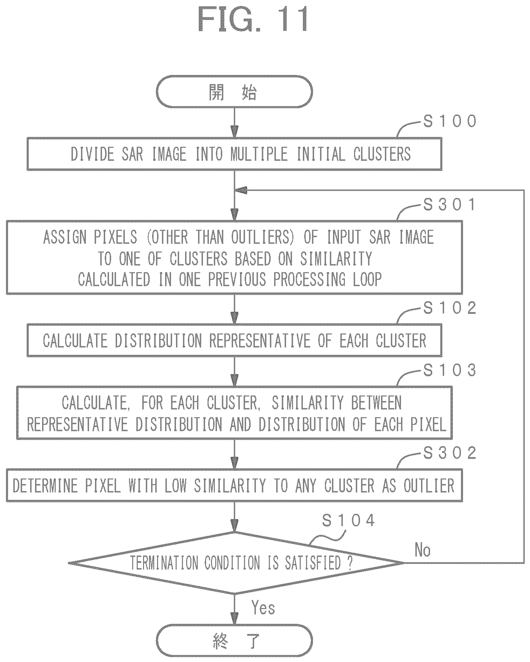

Next, the operation of the image analysis device 103 will be explained with reference to the flowchart of Fig. 11.

As in the first example embodiment, the dividing unit 110 divides the SAR image into multiple initial clusters (step S100). In step S301, the dividing unit 110 assigns each pixel of the input SAR image to one of the clusters based on the similarity calculated in one previous processing loop (in this example embodiment, processing of steps S102 to S103). In other words, the dividing unit 110 generates multiple clusters. In this example embodiment, the dividing unit 110 excludes outliers from the determination of whether or not they have a distribution similar to the representative distribution of the clusters.

The similarity calculation unit 130 calculates a distribution representative of each cluster, i.e., a representative distribution for each cluster (step S102). For each cluster, the representative calculation unit 120 calculates the similarity between the representative distribution and the distribution of pixel values in the cluster (step S103).

The outlier detection unit 150 makes that pixel an outlier (step S301), as described above.

### Example embodiment 4.

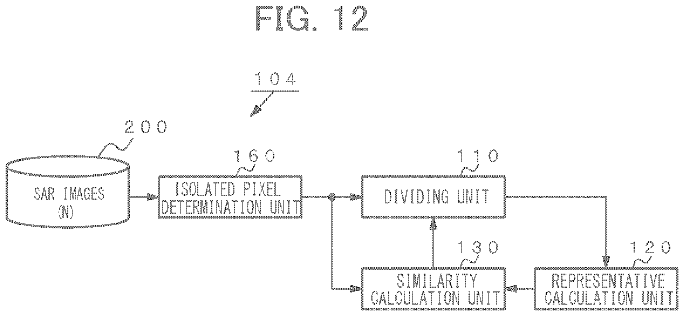

Fig. 12 shows a block diagram of the image analysis device of the fourth example embodiment. The image analysis device 104 of the fourth example embodiment comprises a dividing unit 110, a representative calculation unit 120, a similarity calculation unit 130, and an isolated pixel determination unit 160. The image analysis device 104 can input SAR images from the SAR image storage unit 200. The function of each component in the image analysis device 104 except the isolated pixel determination unit 160 is the same as the function of each component in the image analysis device 101 of the first example embodiment shown in Fig. 1.

The isolated pixel determination unit 160 determines a pixel with a particularly different distribution compared to the neighboring pixels as an isolated pixel.

A isolated pixels can be considered, for example, pixels with a large mean value of reflection intensity divided by the standard deviation of reflection intensity. Pixels with such a characteristic are known to occur at window sashes, corners of stairs, and points where multiple steel frames intersect. In many cases, the distribution of pixel values of isolated pixels has the property that the distribution of pixel values of neighboring pixels is not similar. In order to compare the distribution of pixel values of neighboring pixels, the isolated pixel determination unit 160 compares the distribution of pixel values of a pixel with the distribution of multiple neighboring pixels, and when the proportion of the distribution of pixel values of multiple neighboring pixels that is not similar to the distribution of pixel values of said pixel is small (for example, 1/4 or less), said pixel may be an isolated pixel.

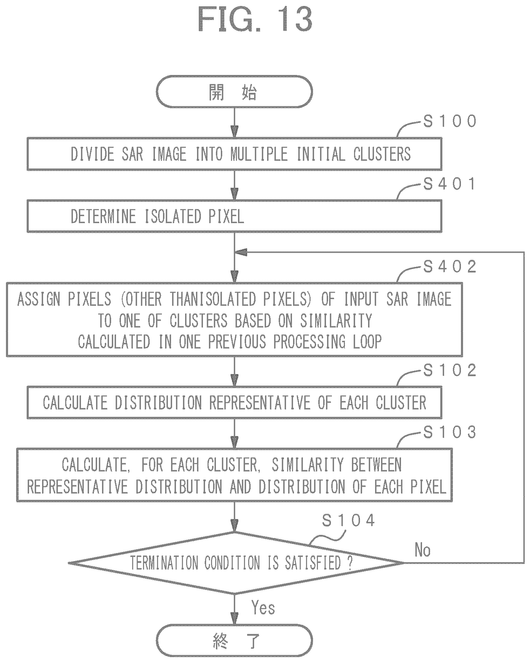

Next, the operation of the image analysis device 104 will be explained with reference to the flowchart of Fig. 13.

As in the first example embodiment, the dividing unit 110 divides the SAR image into multiple initial clusters (step S100). The isolated pixel determination unit 160 determines isolated pixels in the SAR image using the method described above (step S401).

In step S402, the dividing unit 110 assigns each pixel of the input SAR image to one of the clusters based on the similarity calculated in the one previous processing loop (in this example embodiment, processing of steps S102 to S103). In other words, the dividing unit 110 generates multiple clusters. In this example embodiment, the dividing unit 110 excludes isolated pixels from the determination of whether or not they have a distribution similar to the representative distribution of the cluster.

In this example embodiment, the representative calculation unit 120 is not affected by isolated pixels, making the process of generating clusters by the dividing unit 110 more accurate.

### Example embodiment 5.

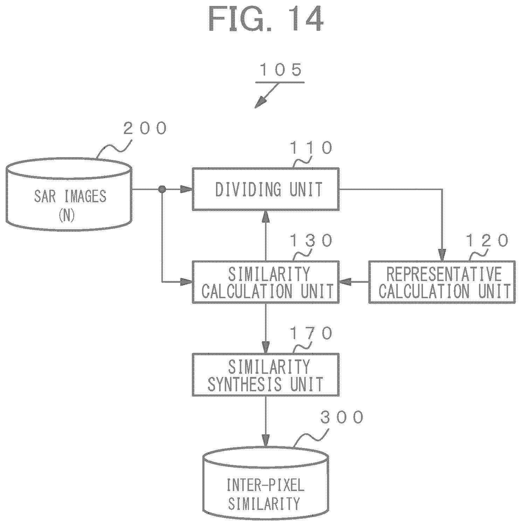

Fig. 14 is a block diagram of the image analysis device of the fifth example embodiment. The image analysis device 105 of the fifth example embodiment comprises a dividing unit 110, a representative calculation unit 120, a similarity calculation unit 130, and a similarity synthesis unit 170. The image analysis device 105 can input SAR images from the SAR image storage unit 200. The function of each component in the image analysis device 105 other than the similarity synthesis unit 170 is the same as the function of each component in the image analysis device 101 of the first example embodiment shown in Fig. 1. The similarity synthesis unit 170 calculates the similarity (specifically, the similarity of the distribution of pixel values) of pixels belonging to one cluster and pixels belonging to another cluster and stores the calculated similarity in the similarity storage unit 300, for example.

As an example, the similarity synthesis unit 170 calculates the similarity between a pixel P belonging to one cluster and a pixel Q belonging to another cluster, all of which are similar to the cluster R. Specifically, the similarity synthesis unit 170 compares the distribution of pixel P with the representative distribution of cluster R to calculate the similarity. The similarity synthesis unit 170 also compares the distribution of pixel Q with the representative distribution of cluster R to calculate the similarity. The method of comparison by the similarity synthesis unit 170 may be the same as the method of comparison by the similarity calculation unit 130.

Further, the similarity synthesis unit 170 adds the two calculated similarities to make the similarity between the distribution of pixel P and the distribution of pixel Q.

This example embodiment is effectively used when the similarity of the distribution between two pixels within an arbitrary distance is required. That is, since the similarity of the distribution between two pixels is obtained by combining (for example, adding) similarities with pre-computed clusters, the similarity of the distribution between the two pixels is immediately provided.

Although the similarity synthesis unit 170 is added to the first example embodiment, the similarity synthesis unit 170 may be added to the second through fourth example embodiments. Example.

Hereinafter, specific examples of the image analysis system in which the image analysis device (similar pixel extraction device) realized in the above example embodiments will be explained.

### Example 1.

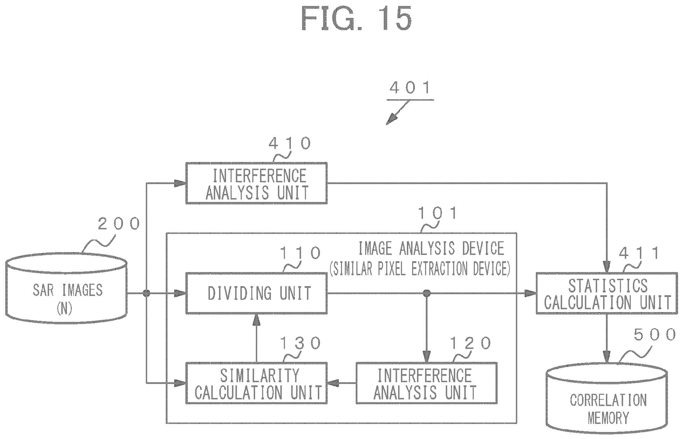

Fig. 15 is a block diagram showing an image analysis system of the first example. The image analysis system 401 of the first example comprises an image analysis device 101, an interference analysis unit 410, and a statistics calculation unit 411. The image analysis devices 102-105 of the second through fifth example embodiments may be used instead of the image analysis device 101. In examples 2 and 3 below, the image analysis devices 102-105 of the second through fifth example embodiments may also be used.

The interference analysis unit 410 takes two or more images from a group of SAR images and multiplies one of the two images by the complex conjugate of the other image or by other means to obtain a phase difference between the two images and so on. Further, the interference analysis unit 410 inputs information that can identify clusters from the dividing unit 110. The statistics calculation unit 411 obtains a complex correlation between the two images for each cluster. Then, the statistics calculation unit 411 calculates a complex correlation matrix, which is a matrix form of the complex correlations for all pairs of input SAR images. The complex correlation matrix is also called a coherence matrix, etc. The statistics calculation unit 411 only needs to calculate the statistics (in this example, the coherence row) for at least one cluster.

The statistics calculation unit 411, for example, stores statistics for each cluster in the correlation memory 500. The statistics (hereafter also referred to as characteristic) may be, for example, a complex average of a simple complex correlation. The statistics calculation unit 411 may perform normalization of the complex mean by the root mean square of the intensity. The statistics calculation unit 411 may calculate robust estimates of the correlation matrix. In other words, the statistics calculation unit 411 may use a robust estimation method of the correlation matrix. For the robust estimation method of the correlation matrix, Minimum Covariance Determinant or the like may be used.

The statistical calculation unit 411 may store the characteristic of each cluster in the correlation memory 500 along with the accompanying information of the cluster. The accompanying information is, for example, information indicating the position in the SAR image of the cluster or the map position of the cluster. The information indicating the position of the cluster is, for example, a position of a representative pixel (for example, the center position) in the cluster. The information indicating the position of the cluster may be information that can identify the occupied area of the cluster in the SAR image. The information that can identify the occupied area of the cluster is, as an example, information that includes a position of the representative pixel in the cluster and the size of the cluster (for example, the radius from the center position of the cluster).

The following are examples of applications of example 1.

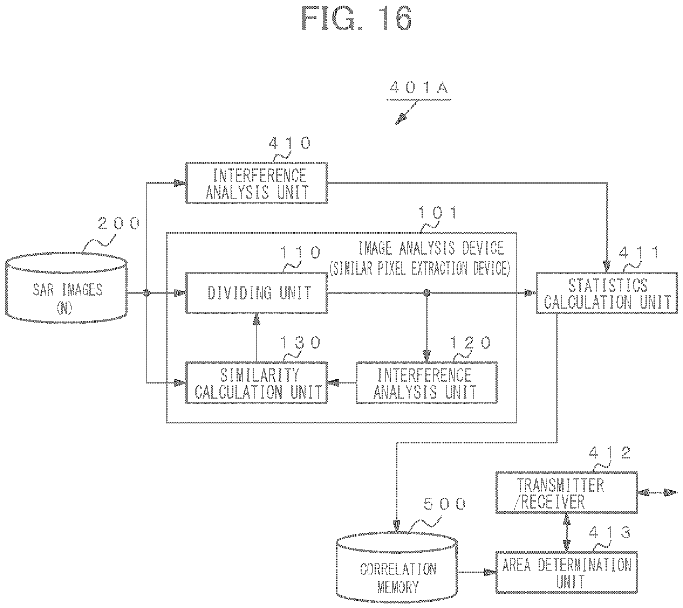

Fig. 16 is a block diagram showing an image analysis system of the modified first example. The image analysis system 401A shown in Fig. 16 is configured by adding a transmitter/receiver 412 and an area determination unit 413 to the image analysis system 401 shown in Fig. 15. It is assumed that information that can identify an area is sent to the image analysis system 401 from an information processing terminal (not shown) that is connected to the image analysis system 401A through a wired or wireless transmission channel. Examples of information processing terminals include a smartphone and a personal computer.

When the transmitter/receiver 412 receives information indicating a predetermined area in the SAR image or a predetermined area on the map from the information processing terminal, the transmitter/receiver 412 outputs that information to the area determination unit 413. The area determination unit 413 finds an area corresponding to the predetermined area in the information. Specifically, the area determination unit 413 compares each of the areas (specifically, position and size) of one or more clusters stored in the correlation memory 500 with a predetermined area. The area determination unit 413 selects the cluster whose position and size match the predetermined area or the cluster whose position and size are most similar to the predetermined area as an area corresponding to the predetermined area. The transmitter/receiver 412 sends the characteristic of the selected cluster to the information processing terminal.

The information processing terminal determines the predetermined area in response to an operation by a user, for example. That is, the predetermined area is specified by a user on the information processing terminal. The image analysis system 401A can use the predetermined area specified by the user as the predetermined area, and can supply a characteristic about the area (cluster) corresponding to the predetermined area to the information processing terminal.

When the information processing terminal has a SAR image, the information processing terminal can determine whether a change has occurred in the SAR image using the characteristic possessed by the image analysis system 401A for the area corresponding to the area specified by the user. In this case, since the image analysis system 401A provides the characteristic of the specified area to the information processing terminal, the amount of data received by the information processing terminal is smaller than when the characteristic of the entire SAR image are provided to the information processing terminal. Therefore, the user of the information processing terminal can quickly grasp changes. As an example, when the characteristic is a histogram of pixel intensities, topographical changes can be grasped quickly, and the topographical situation at the time of a disaster can be grasped quickly.

### Example 2.

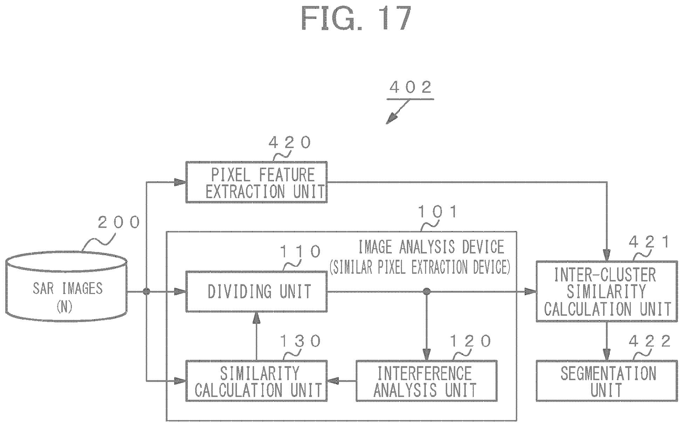

Fig. 17 shows a block diagram of the image analysis system of the second example. The second example image analysis system 402 comprises an image analysis device 101, a pixel feature extraction unit 420, an inter-cluster similarity calculation unit 421, and a segmentation unit 422.

One of the pre-processing steps in image analysis is area division (segmentation). In segmentation, the Superpixel method is used to group similar pixels together, for example.

In this example, the pixel feature extraction unit 420 extracts (calculates) features (pixel features) of the pixels in the SAR image. The inter-cluster similarity calculation unit 421 inputs information that can identify clusters from the dividing unit 110. The inter-cluster similarity calculation unit 421 integrates the pixel feature values in each cluster and makes them into pixel feature values of each cluster.

The segmentation unit 422 compares the feature values of the clusters, and groups together clusters with similar feature values as Superpixel.

When performing area division on a large SAR image with a large number of pixels, in case of comparing the feature values of pixels in the SAR image to attempt to group together pixels with similar feature values, the computational complexity of the segmentation process becomes high, as a result, a long time is required before the process is completed.

In this example, since the dividing unit 110 has already grouped statistically homogeneous pixels together as a cluster, the segmentation can be performed by comparing the features of the clusters. Thus, the computational complexity of the segmentation process is reduced.

A system in which an image analysis system with the image analysis device 101 and the pixel feature extraction unit 420 is prepared, and an information processing terminal with the inter-cluster similarity calculation unit 421 and the segmentation unit 422 receives information from the image analysis system can also be assumed. In such a case, the information processing terminal performs the segmentation.

### Example 3.

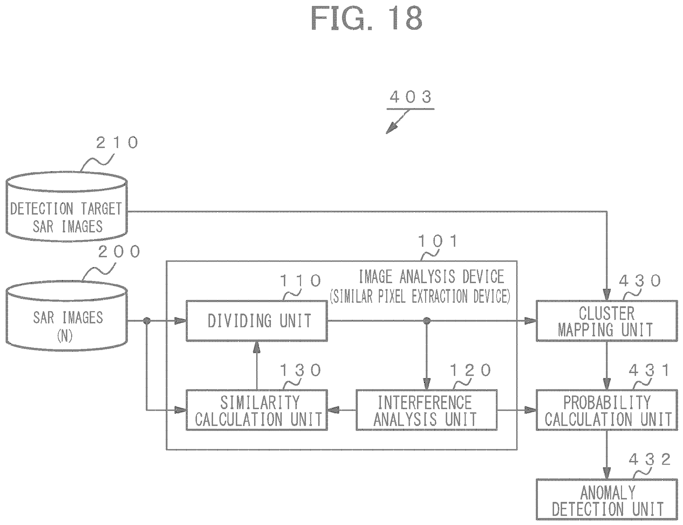

Fig. 18 is a block diagram showing an image analysis system of the third example. The image analysis system 403 of the third example comprises an image analysis device 101, a cluster mapping unit 430, a probability calculation unit 431, and an anomaly detection unit 432.

In this example, the cluster correspondence unit 430 inputs SAR images from the detection target SAR image storage unit 210 in which SAR images of anomaly detection targets are stored. The SAR images of the detection targets are aligned with the SAR images stored in the SAR image storage unit 200 so that the pixels at the same position are pixels at the same location or ground feature.

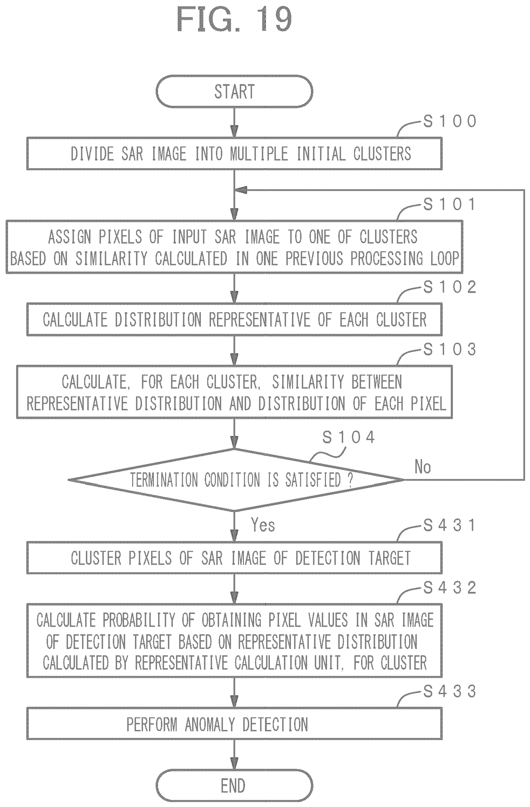

Next, the operation of the image analysis system 403 will be explained with reference to the flowchart of Fig. 19. The processing of steps S100 to S104 is the same as that in the first example embodiment.

The cluster mapping unit 430 inputs information that can identify clusters from the dividing unit 110. The cluster mapping unit 430 divides the SAR image of the detection target according to the division (clustering) by the dividing unit 110 (step S431).

The probability calculation unit 431 calculates a probability of obtaining pixel values in a cluster for the SAR image of the detection target, based on the representative distribution calculated by the representative calculation unit 120 (step S432).

The anomaly detection unit 432 determines that an anomaly (a condition different from normal) has occurred in the SAR image of the detection target when the probability calculated by the probability calculation unit 431 is less than or equal to a predetermined threshold value (step S433). When the image analysis system 403 is applied to change detection or displacement detection, the anomaly detection unit 432 determines that a change or displacement has occurred in the SAR image of the detection target.

Next, a modification of example 3 will be explained. In the modification, the detection target SAR image storage unit 210 stores SAR images taken from a different viewpoint than the viewpoint from which the SAR images stored in the SAR image storage unit 200 are taken. A different viewpoint includes a different type of satellite used to generate the image and a different resolution of the image, but primarily means a different orbit of the satellite used to generate the image. In the modification, the SAR image stored in the detection target SAR image storage unit 210 has not been aligned with the SAR image stored in the SAR image storage unit 200 yet.

In the modification, an image analysis device (hereinafter referred to as the second image analysis device) similarly configured as the image analysis device 101 is installed between the detection target SAR image storage unit 210 and the cluster mapping unit 430. Therefore, in the modification, the cluster mapping unit 430 inputs information that can identify clusters from the dividing unit 110 in the image analysis device 101 and information that can identify clusters from the dividing unit in the second image analysis device.

In the modification, the cluster mapping unit 430 handles accompanying information of the clusters as well as the characteristic of each cluster, similar to the statistics calculation unit 411 in the first example. The accompanying information is information indicating the position and size of the cluster in the SAR image or the position and size on the map of the cluster, as in the first example. The cluster mapping unit 430 detects the area (cluster) in the SAR image from another viewpoint (in this example, the SAR image stored in the detection target SAR image storage unit 210) corresponding to the area (cluster) in the SAR image from a certain viewpoint (in this example, the SAR image stored in the SAR image storage unit 200), using the accompanying information of the clusters. In this example, the areas (clusters) in the SAR image stored in the SAR image storage unit 210 for detection are detected. It should be noted that the corresponding clusters are, for example, clusters whose position and size match or clusters whose position and size are most similar.

In the modification, the cluster mapping unit 430 further combines (for example, adds) the characteristic of the area in the SAR image stored in the SAR image storage unit 200 with the characteristic of the area in the SAR image stored in the detection target SAR image storage unit 210 that is determined to correspond thereto.

In this modification, since the characteristics of the corresponding areas of each of the SAR images from multiple viewpoints that differ from each other are combined, the following effects are obtained.

For example, when the characteristic is a coherence matrix, although displacements and three-dimensional shapes are difficult to ascertain from SAR images from a single viewpoint alone, they are more likely to be graspable in this example.

When the characteristic is a histogram of pixel intensities, the possibility that anomaly detection with a higher update frequency can be achieved by combining multiple satellites is increased. As a result, it is possible to perform anomaly determination, etc. at shorter time intervals.

In the above example embodiments and examples, multiple pixels having variations according to the same probability distribution can be rapidly extracted. In the above examples, since multiple pixels having variations according to the same probability distribution are grouped together as a small number of clusters, analysis such as displacement analysis, coating classification, and anomaly detection can be performed at high speed by replacing pixel-by-pixel analysis with cluster-by-cluster analysis.

In the above example embodiments and examples, SAR images are treated as examples of images, but the above example embodiments and examples can be applied to any image or point cloud in which each pixel has different distribution characteristic.

Each component in each of the above example embodiments may be configured with a single piece of hardware, but can also be configured with a single piece of software. Alternatively, the components may be configured with a plurality of pieces of hardware or a plurality of pieces of software. Further, part of the components may be configured with hardware and the other part with software.

The functions (processes) in the above example embodiments may be realized by a computer having a processor such as a central processing unit (CPU), a memory, etc. For example, a program for performing the method (processing) in the above example embodiments may be stored in a storage device (storage medium), and the functions may be realized with the CPU executing the program stored in the storage device.

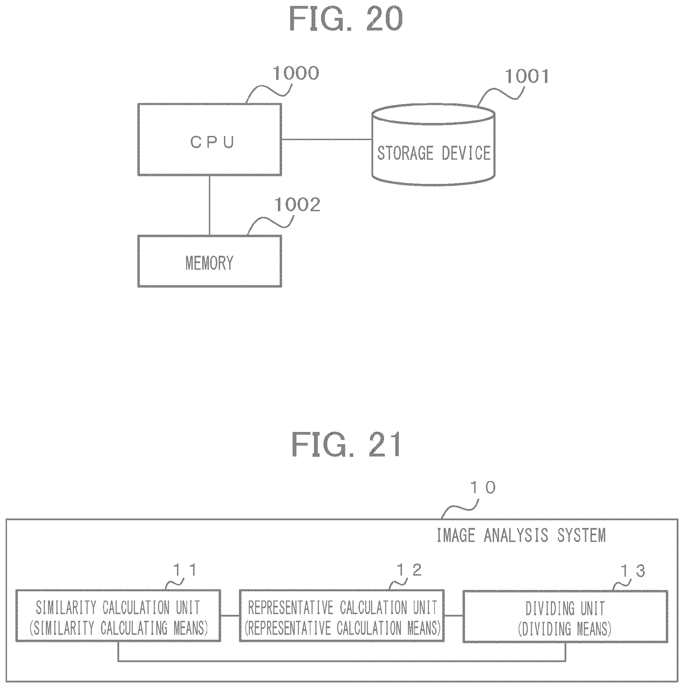

Fig. 20 is a block diagram of a computer with a CPU. The computer is implemented in an image analysis system. The CPU 1000 executes processing in accordance with a program stored in a storage device 1001 to realize the functions in the above example embodiments and examples. That is to say, the functions of the dividing unit 110, the representative calculation unit 120, the similarity calculation unit 130, the area limitation unit 140, the outlier detection unit 150, the isolated pixel determination unit 160, the similarity composition unit 170, the interference analysis unit 410, the statistics calculation unit 411, the pixel feature extraction unit 420, the inter-cluster similarity calculation unit 421, the segmentation unit 422, the cluster mapping unit 430, the probability calculation unit 431, and the anomaly detection unit 432 in the image analysis device and the image analysis system shown in Fig. 1, Fig. 6, Fig. 10, Fig. 12, Fig. 14 to Fig. 18.

The storage device 1001 is, for example, a non-transitory computer readable media. The non-transitory computer readable medium is one of various types of tangible storage media. Specific examples of the non-transitory computer readable media include a magnetic storage medium (for example, flexible disk, magnetic tape, hard disk), a magneto-optical storage medium (for example, magneto-optical disc), a compact disc-read only memory (CD-ROM), a compact disc-recordable (CD-R), a compact disc-rewritable (CD-R/W), and a semiconductor memory (for example, a mask ROM, a programmable ROM (PROM), an erasable PROM (EPROM), a flash ROM).

The program may be stored in various types of transitory computer readable media. The transitory computer readable medium is supplied with the program through, for example, a wired or wireless communication channel, or, through electric signals, optical signals, or electromagnetic waves.

The memory 1002 is a storage means implemented by a RAM (Random Access Memory), for example, and temporarily stores data when the CPU 1000 executes processing. It can be assumed that a program held in the storage device 1001 or a temporary computer readable medium is transferred to the memory 1002 and the CPU 1000 executes processing based on the program in the memory 1002.

Fig. 21 is a block diagram showing the main part of the image analysis system. The image analysis system 10 shown in Fig. 21 comprises a similarity calculation unit (similarity calculating means) 11 (in the example embodiments and examples, realized by the similarity calculation unit 130) which calculates similarity between a representative distribution representing a cluster and a distribution of pixel values in the cluster, a representative calculation unit (representative calculation means) 12 (in the example embodiments and examples, realized by the representative calculation unit 120) which calculates a distribution for a plurality of pixels in each cluster as the representative distribution, and a dividing unit (dividing means) 13 (in the example embodiments and examples, realized by the dividing unit 110) which assigns pixels in an input image to one of a plurality of the clusters with reference to the similarity.

Apart of or all of the above example embodiments may also be described as, but not limited to, the following supplementary notes.

(Supplementary note 1) A image analysis system comprising:
similarity calculation means for calculating similarity between a representative distribution representing a cluster and a distribution of pixel values in the cluster,
representative calculation means for calculating a distribution for a plurality of pixels in each cluster as the representative distribution, and
dividing means for assigning pixels in an input image to one of a plurality of the clusters with reference to the similarity.

(Supplementary note 2) The image analysis system according to Supplementary note 1, further comprising area limitation means (in the example embodiments and examples, realized by the area limitation unit 140) for limiting a search range which is a processing range of the similarity calculation means, based on a position of the pixel representing the cluster,
wherein the representative calculation means determines the position of the pixel representing the cluster.

(Supplementary note 3) The image analysis system according to Supplementary note 1, further comprising outlier detection means (in the example embodiments and examples, realized by the outlier detection unit 150) for regarding the distribution of pixel values as an outlier, when the similarity calculated by the similarity calculation means is different from any of the clusters compared to the representative distribution,
wherein the dividing means excludes the outlier from the determination of whether or not the outlier has a distribution similar to the representative distribution representing the cluster.

(Supplementary note 4) The image analysis system according to Supplementary note 1, further comprising isolated pixel determination means (in the example embodiments and examples, realized by the isolated pixel determination unit 160) for determining a pixel having a different distribution compared to neighboring pixels in the input image to be an isolated pixel,
wherein the dividing means excludes the isolated pixel from the determination of whether or not the outlier has a distribution similar to the representative distribution representing the cluster.

(Supplementary note 5) The image analysis system according to any one of Supplementary notes 1 to 4, further comprising similarity synthesis means (in the example embodiments and examples, realized by the similarity synthesis unit 170) for synthesizing a similarity of the distribution of pixel values belonging to one cluster and a similarity of the distribution of pixel values belonging to another cluster.

(Supplementary note 6) The image analysis system according to any one of Supplementary notes 1 to 5, further comprising complex correlation calculation means (in the example embodiments and examples, realized by the interference analysis unit 410 and the statistics calculation unit 411) for calculating a complex correlation between two images for each cluster.

(Supplementary note 7) The image analysis system according to any one of Supplementary notes 1 to 5, further comprising
inter-cluster similarity calculation means (in the example embodiments and examples, realized by the inter-cluster similarity calculation unit 421) for calculating a similarity between the clusters, and
segmentation means (in the example embodiments and examples, realized by the segmentation unit 422) for dividing an image based on the similarity between the clusters.

(Supplementary note 8) The image analysis system according to any one of Supplementary notes 1 to 5, further comprising
cluster mapping means for dividing an image of a detection target according to the clusters generated by the dividing means (in the example embodiments and examples, realized by the cluster mapping unit 430), and
probability calculation means (in the example embodiment and example, realized by the probability calculation unit 431) for calculating a probability of obtaining the pixel values in the cluster for the image of the detection target, based on the pixels in the cluster for the image of the detection target and the representative distribution representing the cluster.

(Supplementary note 9) A image analysis system comprising:
dividing means (in the examples, realized by the dividing unit 110) for dividing each of a plurality of SAR images, in which an analysis area is commonly captured, into a plurality of areas that satisfy a criterion to be determined as homogeneous,
characteristic obtaining means (in the examples, realized by the statistics calculation unit 411) for obtaining characteristic for at least one of the plurality of areas, and
sending means (in the examples, realized by the transmitter/receiver 412) for sending information including a position of the area and the characteristic determined for the area, for the at least one area.

(Supplementary note 10) The image analysis system according to Supplementary note 9, further comprising area determination means (in the examples, realized by the area determination unit 413) for finding an area corresponding to a predetermined area among the plurality of areas,
wherein the sending means sends the characteristic for the found area.

(Supplementary note 11) A image analysis system comprising:
dividing means for dividing each SAR image in a group of SAR images including SAR images from a plurality of viewpoints differing from each other into a plurality of areas that satisfy a criterion to be determined as homogeneous,
characteristic obtaining means for obtaining characteristic for each of the plurality of area, and
synthesizing means for synthesizing a characteristic obtained for an area in the SAR image from one of the plurality of viewpoints and an area in the SAR image from another viewpoint corresponding to said area.

(Supplementary note 12) A image analysis method comprising:
calculating similarity between a representative distribution representing a cluster and a distribution of pixel values in the cluster,
calculating a distribution for a plurality of pixels in each cluster as the representative distribution, and
assigning pixels in an input image to one of a plurality of the clusters with reference to the similarity.

(Supplementary note 13) The image analysis method according to Supplementary note 12, further comprising
determining a position of the pixel representing the cluster, and
limiting a search range which is a range in which the similarity between the representative distribution representing the cluster and the distribution of pixel values in the cluster is calculated.

(Supplementary note 14) The image analysis method according to Supplementary note 12 or 13, further comprising
calculating a complex correlation between two images for each cluster.

(Supplementary note 15) A computer readable recording medium storing an image analysis program, wherein
the image analysis program causes a computer to execute:
calculating similarity between a representative distribution representing a cluster and a distribution of pixel values in the cluster,
calculating a distribution for a plurality of pixels in each cluster as the representative distribution, and
assigning pixels in an input image to one of a plurality of the clusters with reference to the similarity.

(Supplementary note 16) The computer readable recording medium according to Supplementary note 15, wherein
the image analysis program causes a computer to further execute
determining a position of the pixel representing the cluster, and
limiting a search range which is a range in which the similarity between the representative distribution representing the cluster and the distribution of pixel values in the cluster is calculated.

(Supplementary note 17) The computer readable recording medium according to Supplementary note 15 or 16, wherein
the image analysis program causes a computer to execute:
calculating a complex correlation between two images for each cluster.

(Supplementary note 18) An image analysis program causing a computer to execute:
calculating similarity between a representative distribution representing a cluster and a distribution of pixel values in the cluster,
calculating a distribution for a plurality of pixels in each cluster as the representative distribution, and
assigning pixels in an input image to one of a plurality of the clusters with reference to the similarity.

(Supplementary note 19) The image analysis program according to Supplementary note 18, wherein
the image analysis program causes a computer to further execute
determining a position of the pixel representing the cluster, and
limiting a search range which is a range in which the similarity between the representative distribution representing the cluster and the distribution of pixel values in the cluster is calculated.

(Supplementary note 20) The image analysis program according to Supplementary note 18 or 19, wherein
the image analysis program causes a computer to execute:
calculating a complex correlation between two images for each cluster.

Although the invention of the present application has been described above with reference to example embodiments and examples, the present invention is not limited to the above example embodiments. Various changes can be made to the configuration and details of the present invention that can be understood by those skilled in the art within the scope of the present invention.

### Reference Signs List

10, 401, 40 1A, 402, 403 Image analysis system
11 Similarity calculation unit
12 Representative calculation unit
13 Dividing unit
101, 102, 103, 104, 105 Image analysis device
110 Dividing unit
120 Representative calculation unit
130 Similarity calculation unit
140 Area limitation unit
150 Outlier detection unit
160 Isolated pixel determination unit
170 Similarity synthesis unit
200 SAR image storage unit
410 Interference analysis unit
411 Statistics calculation unit
412 Transmitter/receiver
413 Area determination unit
420 Pixel feature extraction unit
421 Inter-cluster similarity calculation unit
422 Segmentation unit
430 Cluster mapping unit
431 Probability calculation unit
432 Anomaly detection unit
500 Correlation memory
1000 CPU
1001 Storage device/
1002 Memory

## Claims

1. A image analysis system comprising:
similarity calculation means for calculating similarity between a representative distribution representing a cluster and a distribution of pixel values in the cluster,
representative calculation means for calculating a distribution for a plurality of pixels in each cluster as the representative distribution, and
dividing means for assigning pixels in an input image to one of a plurality of the clusters with reference to the similarity.

2. The image analysis system according to claim 1, further comprising area limitation means for limiting a search range which is a processing range of the similarity calculation means, based on a position of the pixel representing the cluster,
wherein the representative calculation means determines the position of the pixel representing the cluster.

3. The image analysis system according to claim 1, further comprising outlier detection means for regarding the distribution of pixel values as an outlier, when the similarity calculated by the similarity calculation means is different from any of the clusters compared to the representative distribution,
wherein the dividing means excludes the outlier from the determination of whether or not the outlier has a distribution similar to the representative distribution representing the cluster.

4. The image analysis system according to claim 1, further comprising isolated pixel determination means for determining a pixel having a different distribution compared to neighboring pixels in the input image to be an isolated pixel,
wherein the dividing means excludes the isolated pixel from the determination of whether or not the outlier has a distribution similar to the representative distribution representing the cluster.

5. The image analysis system according to any one of claims 1 to 4, further comprising similarity synthesis means for synthesizing a similarity of the distribution of pixel values belonging to one cluster and a similarity of the distribution of pixel values belonging to another cluster.

6. The image analysis system according to any one of claims 1 to 5, further comprising complex correlation calculation means for calculating a complex correlation between two images for each cluster.

7. The image analysis system according to any one of claims 1 to 5, further comprising
inter-cluster similarity calculation means for calculating a similarity between the clusters, and
segmentation means for dividing an image based on the similarity between the clusters.

8. The image analysis system according to any one of claims 1 to 5, further comprising
cluster mapping means for dividing an image of a detection target according to the clusters generated by the dividing means, and
probability calculation means for calculating a probability of obtaining the pixel values in the cluster for the image of the detection target, based on the pixels in the cluster for the image of the detection target and the representative distribution representing the cluster.

9. A image analysis system comprising:
dividing means for dividing each of a plurality of SAR images, in which an analysis area is commonly captured, into a plurality of areas that satisfy a criterion to be determined as homogeneous,
characteristic obtaining means for obtaining characteristic for at least one of the plurality of areas, and
sending means for sending information including a position of the area and the characteristic determined for the area, for the at least one area.

10. The image analysis system according to claim 9, further comprising area determination means for finding an area corresponding to a predetermined area among the plurality of areas,
wherein the sending means sends the characteristic for the found area.

11. A image analysis system comprising:
dividing means for dividing each SAR image in a group of SAR images including SAR images from a plurality of viewpoints differing from each other into a plurality of areas that satisfy a criterion to be determined as homogeneous,
characteristic obtaining means for obtaining characteristic for each of the plurality of area, and
synthesizing means for synthesizing a characteristic obtained for an area in the SAR image from one of the plurality of viewpoints and an area in the SAR image from another viewpoint corresponding to said area.

12. A image analysis method comprising:
calculating similarity between a representative distribution representing a cluster and a distribution of pixel values in the cluster,
calculating a distribution for a plurality of pixels in each cluster as the representative distribution, and
assigning pixels in an input image to one of a plurality of the clusters with reference to the similarity.

13. The image analysis method according to claim 12, further comprising
determining a position of the pixel representing the cluster, and
limiting a search range which is a range in which the similarity between the representative distribution representing the cluster and the distribution of pixel values in the cluster is calculated.

14. The image analysis method according to claim 12 or 13, further comprising
calculating a complex correlation between two images for each cluster.

15. A computer readable recording medium storing an image analysis program, wherein
the image analysis program causes a computer to execute:
calculating similarity between a representative distribution representing a cluster and a distribution of pixel values in the cluster,
calculating a distribution for a plurality of pixels in each cluster as the representative distribution, and
assigning pixels in an input image to one of a plurality of the clusters with reference to the similarity.

16. The computer readable recording medium according to claim 15, wherein
the image analysis program causes a computer to further execute
determining a position of the pixel representing the cluster, and
limiting a search range which is a range in which the similarity between the representative distribution representing the cluster and the distribution of pixel values in the cluster is calculated.

17. The computer readable recording medium according to claim 15 or 16, wherein
the image analysis program causes a computer to execute:
calculating a complex correlation between two images for each cluster.
